# EUROPEAN PATENT SPECIFICATION

(11) **EP 4 087 036 B1**
(45) Date of publication and mention of the grant of the patent: **10.12.2025**
(21) Application number: 21795977.4
(22) Date of filing: 02.02.2021
(51) Int. Cl.: H01M 50/20, H01M 50/35

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 29.04.2020 KR 20200052249
(43) Date of publication of application: 09.11.2022
(73) Proprietor: LG Energy Solution, Ltd., Seoul 07335 (KR)
(72) Inventor: JANG, Sunghwan, Daejeon 34122 (KR); SEONG, Junyeob, Daejeon 34122 (KR); KIM, Min Seop, Daejeon 34122 (KR)
(74) Representative: Plasseraud IP
(86) International application number: PCT/KR2021/001335
(87) International publication number: WO 2021/221275

(56) References cited:
- CN-A- 106 531 912
- DE-A1- 102012 219 784
- DE-A1- 102018 123 691
- KR-A- 20150 142 338
- KR-A- 20150 142 338
- KR-A- 20170 036 639
- KR-A- 20200 008 624
- US-A1- 2013 095 359
- US-A1- 2016 126 531
- US-A1- 2016 336 563
- US-A1- 2019 198 951

## Description

### [Technical Field]

### CROSS-REFERENCE TO RELATED APPLICATION

This application claims priority of Korean Patent Application No. 10-2020-0052249 filed in the Korean Intellectual Property Office on April 29, 2020.

The present invention relates to a battery module and a battery pack including the same. More particularly, the present invention relates to a battery module that is easy to be assembled and may reduce a cost and a battery pack including the same.

### [Background Art]

Rechargeable batteries having high application characteristics and electrical characteristics such as high energy density according to their products are widely applied to battery vehicles, hybrid vehicles, and electric power storage devices driven by electric driving sources as well as portable devices. These rechargeable batteries are attracting attention as new energy sources for improving environmentally-friendliness and energy efficiency in that they do not generate any by-products of energy use as well as their primary merit, in which they can drastically reduce the use of fossil fuels.

In small mobile devices, one, or two, or three battery cells are used per device, while medium and large devices such as automobiles require high power/large capacity. Therefore, a medium-to-large battery module in which a plurality of battery cells are electrically connected is used.

Since it is preferable for medium and large battery modules to be manufactured with as small a size and weight as possible, a prismatic battery and a pouch-type battery, which may have a high integration degree and have a small weight with respect to capacity, are mainly used as a battery cell of the medium and large battery modules. Meanwhile, in order to protect a battery cell laminated body from external impact, heat, or vibration, the battery module may include a frame member that receives the battery cell laminated body in an internal space with front and rear openings.

As such a frame member, a module frame formed to form a tube shape by combining a U-shaped frame and an upper plate covering the opened upper part of the U-shaped frame may be applied. In order to form such a module frame, in a state in which the battery cell stack is mounted inside the U-shaped frame of the module frame, the U-shaped frame and the upper plate may be coupled by a welding or the like. At this time, in the conventional structure in which the upper plate covers the entire opened upper surface of the U-shaped frame, there were problems such as increasing of welding points for bonding the upper plate and the U-shaped frame and having to provide a separate configuration for discharging a flame or high temperature/high-pressure gas that may occur when a thermal runaway occurs in some cells.

KR 2015 0142338 A and US 2016/126531 A1 both disclose a battery wherein an upper housing and an end plate for a battery module assembly are connected by a bushing.

Further prior art is described in DE 10 2012 219784 A1 US 2013/095359 A1, DE 10 2018 123691 A1 and US 2016/336563 A1.

### [Disclosure]

### [Technical Problem]

It is an object of the present invention to provide a battery module and a battery pack including the same that may improve an assemble ability, reduce a cost, and simultaneously secure a safety.

### [Technical Solution]

A battery module according to the herein claimed invention includes a battery cell stacked member in which a plurality of battery cells are stacked; an U-shaped frame that accommodates the battery cell stacked member and has an opened upper part; and at least two upper plates spaced apart from each other and covering a part of the battery cell stacked member at the opened upper part of the U-shaped frame, wherein the part where two adjacent upper plates among the at least two upper plates are spaced apart from each other exists as an empty space, wherein the U-shaped frame includes a bottom part and two side parts extending from both ends of the bottom part, wherein the upper plate has a strap shape so that both ends of the upper plate are joined to the upper part of the U-shaped frame, wherein the upper plate includes a coupling portion extending toward the U-shaped frame at both ends, and wherein the coupling portion of the upper plate and the U-shaped frame are coupled by a snap fit, the coupling portion includes a hook portion in which a protrusion protruded toward the battery cell stacked member is formed, and the U-shaped frame includes a coupling hole that engages the protrusion, or vice versa.

The empty space may act as a vent hole.

A protection sheet disposed between the upper plate and the battery cell stacked member may be further included.

A battery pack according to another exemplary embodiment of the present invention includes the battery module.

A device according to another exemplary embodiment of the present invention may include at least one battery pack above-described.

### [Advantageous Effects]

According to exemplary embodiments of the present invention, by configuring the upper plate of the module frame as a plurality of upper plates covering the part of the battery cell stacked member, it is possible to improve the efficiency of the assembly and reduce the cost.

In addition, when an issue such as thermal runaway occurs in the battery cell stacked member, the generated flame, high temperature/high pressure gas may be efficiently discharged, thereby improving the safety of the battery module.

The effects desired to be achieved in the present invention are not limited to the aforementioned effects, and other effects not described above will be apparent to those skilled in the art from the disclosure of the present invention.

### [Description of the Drawings]

FIG. 1 is an exploded perspective view of a battery module according to an exemplary embodiment of the present invention.
FIG. 2 is a view showing a shape in which configurations of a battery module in FIG. 1 are assembled.
FIG. 3 is a view for explaining a case in which a thermal runaway occurs in a battery module according to an exemplary embodiment of the present invention.
FIG. 4 is a perspective view of a battery module according to a comparative example.
FIG. 5 is an exploded perspective view of a battery module according to another exemplary embodiment of the present invention.

### [Mode for Invention]

It should be understood that the exemplary embodiment described below is illustratively shown to help the understanding of the invention, and the present invention may be implemented with various modifications different from the exemplary embodiment described herein. However, when it is determined that a detailed description of a related known function or constituent element in describing the present invention may unnecessarily obscure the gist of the present invention, the detailed description and detailed illustration thereof will be omitted. In addition, the accompanying drawings are not drawn into an actual scale, but dimensions of some constituent elements may be exaggerated in order to help the understanding of the invention.

The terms first and second used in this application may be used to describe various configurations elements, but the constituent elements should not be limited by the terms. The above terms are used only for distinguishing one constituent element from other constituent elements.

In addition, the terms used in the present application are used only to describe specific exemplary embodiments, and are not intended to limit the scope. When explaining the singular, unless explicitly described to the contrary, it may be interpreted as a plural meaning. In the present application, terms such as "comprise", "consisting of" or "consisting" are intended to designate that features, numbers, steps, operations, constituent elements, parts, or combinations thereof described in the specification exist, one or the other. It should be understood that the existence or addition of the above other features, numbers, steps, operations, constituent elements, parts, or combinations thereof is not excluded in advance.

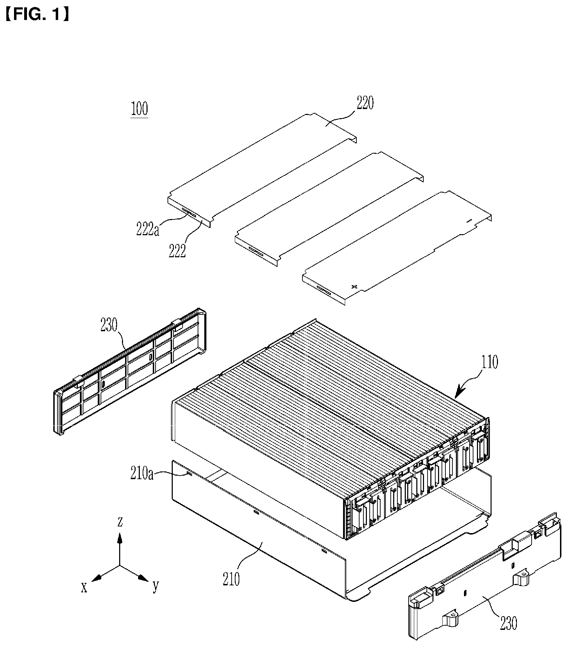

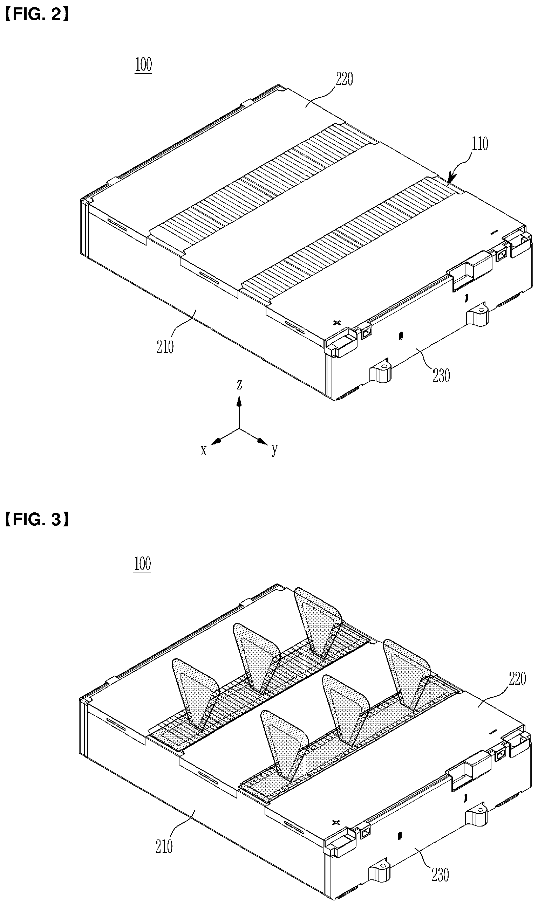

Hereinafter, a configuration of a battery module according to an exemplary embodiment of the present invention is described with reference to FIG. 1 and FIG. 2.

FIG. 1 is an exploded perspective view of a battery module according to an exemplary embodiment of the present invention. FIG. 2 is a view showing the battery module of FIG. 1 assembled.

Referring to FIG. 1 and FIG. 2, the battery module 100 according to an exemplary embodiment of the present invention includes a battery cell stacked member 110 in which a plurality of battery cells is stacked, and a module frame 210 and 220 of accommodating the battery cell stacked member 110.

The battery cell according to the present exemplary embodiment is a rechargeable battery and may be configured as a pouch-type rechargeable battery. Such battery cells may be configured in a plurality, and a plurality of battery cells may be stacked to each other to be electrically connected to each other to form a battery cell stacked member 110. The plurality of battery cells include electrode leads protruding from an electrode assembly, a cell case, and an electrode assembly, respectively.

The module frame 210 and 220 accommodates the battery cell stacked member 110. According to an exemplary embodiment of the present invention, the module frame 210 and 220 includes a U-shaped frame 210 that covers the lower surface and both sides of the battery cell stacked member 110, and at least two upper plates 220 that are disposed on the upper surface of the battery cell stacked member 110.

The battery module 100 according to the present exemplary embodiment may further include an end plate 230 covering the front and rear surfaces of the battery cell stacked member 110. It is possible to physically protect the battery cell stacked member 110 accommodated therein through the module frames 210 and 220 described above. Meanwhile, although not specifically illustrated, a bus bar frame on which a bus bar is mounted and an insulating cover for an electrical insulation may be positioned between the battery cell stacked member 110 and the end plate 230.

The U-shaped frame 210 of the module frame 210 and 220 accommodating the battery cell stacked member 110 includes a bottom part and two side parts extending from both ends of the bottom part. The bottom part covers the lower surface of the battery cell stacked member 110 (the opposite direction to a z-axis), and the side parts cover both sides of the battery cell stacked member 110 (the x-axis direction and the opposite direction thereof). Meanwhile, although not specifically shown, a heat sink capable of cooling a heat from the battery module 100 by injecting a refrigerant, etc., may be integrally formed on the lower surface of the bottom part of the U-shaped frame. In addition, although not specifically shown, a thermal conductive resin layer including a thermal conductive resin may be positioned between the bottom part of the U-shaped frame 210 and the battery cell stacked member 110. The thermal conductive resin may include a thermal conductive adhesive material, specifically, at least one of a silicone material, a urethane material, and an acrylic material. The thermal conductive resin may be liquid during the coating, but is cured after the coating, thereby serving to fix at least one battery cell constituting the battery cell stacked member 110.

In addition, it has excellent thermal conductive characteristics, so that the heat generated by the battery cell may be quickly transferred to the lower side of the battery module 100.

The upper plate 220 may be disposed on the rest upper surface (the z-axis direction) except for the lower surface and the both sides covered by the U-shaped frame 210. At least two upper plates 220 are provided, and one upper plate 220 is formed in a strap shape that covers a part of the battery cell stacked member 110. That is, it may have a rectangular strap shape formed long in the x-axis direction in the drawing.

At least two upper plates 220 (three upper plates 220 in the drawing) are disposed to be spaced apart from each other. That is, they are spaced apart from each other in the y-axis direction in the drawing. As shown in the drawing, an empty space exists between the upper plates 220 spaced apart from each other. In this specification, it has been described as an example that three upper plates 220 are provided and there are two empty spaces, but the present invention is not limited thereto and may be appropriately selected in consideration of the size of the battery module 100 and the like. By having such an empty space, the weight of the module frames 210 and 220 as a whole may be reduced, and a material cost may also be reduced. In addition, even if issues such as thermal runaway occur inside the battery module 100 and high temperature/high pressure gas and flames are generated, they may be easily discharged to the outside. FIG. 3 is a schematic view of a case where thermal runaway occurs in the battery module as described above. That is, as indicated by an inverted triangle, the internal high temperature/high pressure gas and flames may be quickly discharged to the outside through the empty space between the upper plates 220. Thereby, it is possible to prevent explosion, etc. from accumulating the high temperature/high pressure gas and the flame inside the battery module 100, thereby improving the safety of the battery module 100.

At both ends of the upper plate 220, a coupling portion 222 extending toward the U-shaped frame 210 is included. That is, in the drawing, the coupling portion 222 is formed to cover the upper portion of the side surface of the U-shaped frame 210 when the upper plate 220 and the U-shaped frame 210 are coupled by extending from the y-axis direction end of the upper plate 220 to the z-axis direction lower portion.

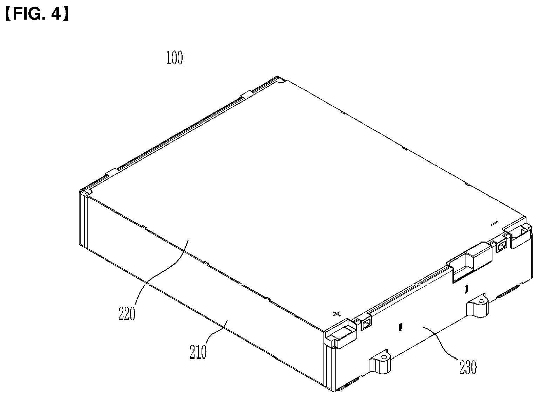

The coupling portion 222 is coupled to the upper portion of the side of the U-shaped frame 210 by snap fit. In the present exemplary embodiment, the combination of the upper plate 220 and the U-shaped frame 210 is not made in the entire corner of the upper part of the side of the U-shaped frame 210, but only in the contact part with the upper plate 220 excluding the empty space, thereby increasing the assembly efficiency when manufacturing the battery module 100. That is, as shown in FIG. 4 showing a conventional battery module 100, since the welding is performed along the entire upper edge of the U-shaped frame 210, the time and cost for the welding increase. On the other hand, according to the present exemplary embodiment, since the portion in contact with the U-shaped frame 210 and the upper plate 220 is reduced by a snap-fit, as the firm bond is possible with fewer bonding points, the assembly efficiency may be greatly improved.

Also, according to the conventional structure shown in FIG. 4, since the entire upper surface of the battery cell stacked member 110 is covered by the upper plate 220, even if the flame and the high temperature/high pressure gas are generated by the thermal runaway, there is a risk of an explosion of the battery module 100 because it is difficult to discharge them to the outside, in order to prevent this, a separate discharge hole or the like must be provided on the upper plate or the end plate, which complicates the manufacturing process. On the other hand, in the present exemplary embodiment, as described above, even if an issue such as a thermal runaway occurs in the battery cell stacked member 110 and high temperature/high pressure gas and flames occur, since it is possible to quickly discharge them to the outside through the empty space between the upper plate 220, it is possible to prevent the explosion of the battery module 100 by the accumulated heat and gas, and thus the safety of the battery module 100 may be improved.

On the other hand, the coupling portion 222 of the upper plate 220, as shown in FIG. 1, includes a hook portion 222a in which a protrusion protruding toward the battery cell stacked member is formed, and in this case, the U-shaped frame 210 includes a coupling hole 210a coupled to the protrusion. According to this, the upper plate 220 and the U-shaped frame 210 are coupled by a snap-fit method. That is, when combining the upper plate 220 to the U-shaped frame 210 from the upper portion, while the protrusion is first in contact with the upper part of the U-shaped frame 210, and the coupling portions 222 of both ends of the upper plate 220 are slightly opened outward and combined with the U-shaped frame 210, the protrusion may be coupled until it is inserted into the coupling hole 210a. However, this is an example of a coupling method, and unlike this, a hole may be formed on the upper plate 220 side, a protrusion may be formed on the outer surface of the U-shaped frame 210, or other types of the snap-fit coupling are possible. In addition, as illustrated in the above, the bonding by the welding, the bolting, the adhesive, etc. is also possible.

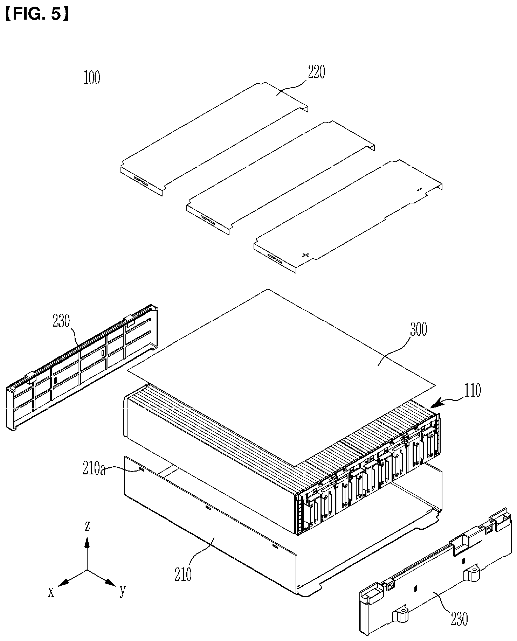

FIG. 5 is an exploded perspective view of a battery module according to another exemplary embodiment of the present invention.

Another exemplary embodiment of the present invention may further include a protection sheet 300 on the upper portion of the battery cell stacked member 110. That is, by providing the protection sheet 300 formed of an insulating material, etc., on the battery cell stacked member 110, it is possible to prevent the battery cell stacked member 110 from being damaged in the assembly process of the upper plate 220, etc, in addition, it is possible to prevent the battery cell stacked member 110 or internal electronic components from being damaged by the empty space between the upper plate 220.

As above described, according to an exemplary embodiment of the present invention, by configuring the upper plate 220 of the module frame 210 and 220 as a plurality of upper plates 220 covering the part of the upper part of the battery cell stacked member 110, and configuring the empty space between the neighboring upper plates 220, It is possible to improve the assembly efficiency and to reduce the cost by reducing the material cost. In addition, even if the issues such as a thermal runaway occur in the battery cell stacked member 110 and high temperature/high pressure gas and flames are generated, it is possible to quickly discharge to the outside through the empty space between the upper plate 220, and it is possible to prevent an explosion of the battery module 100 by the accumulated heat and gas, and thus the safety of the battery module 100 may be improved.

The battery module described above may be included in the battery pack. The battery pack may have a structure in which one or more battery modules according to the present exemplary embodiment are collected and a battery management system (BMS) that manages a temperature or voltage of the battery and a cooling device are added and packed.

The battery pack may be applied to various devices. Such a device may be a transportation means such as an electric bicycle, an electric vehicle, a hybrid vehicle, etc., but the present invention is not limited to this, and may be applied to various devices capable of using the battery module and the battery pack including the same, which belongs to the scope of the present invention as defined by the appended claims.

### <Description of symbols>

- 110:: battery cell stacked member
- 210:: U-shaped frame
- 220:: upper plate
- 230:: end plate
- 222:: coupling portion

## Claims

1. A battery module (100) comprising:
a battery cell stacked member (110) in which a plurality of battery cells are stacked;
an U-shaped frame (210) that accommodates the battery cell stacked member (110) and has an opened upper part,
wherein at least two upper plates (220) are spaced apart from each other and covering a part of the battery cell stacked member (110) at the opened upper part of the U-shaped frame (210),
wherein the part where two adjacent upper plates (220) among the at least two upper plates (220) are spaced apart from each other exists as an empty space,
wherein the U-shaped frame (210) includes a bottom part and two side parts extending from both ends of the bottom part,
wherein the upper plate (220) has a strap shape so that both ends of the upper plate (220) are joined to the upper part of the U-shaped frame (210),
wherein the upper plate (220) includes a coupling portion (222) extending toward the U-shaped frame (210) at both ends,
and wherein:
the coupling portion (222) of the upper plate (220) and the U-shaped frame (210) are coupled by a snap fit,
the coupling portion (222) includes a hook portion (222a) in which a protrusion protruding toward the battery cell stacked member (110) is formed, and
the U-shaped frame (210) includes a coupling hole (210a) that engages the protrusion, or vice versa.

2. The battery module (100) of claim 1, wherein:
the empty space acts as a vent hole.

3. The battery module (100) of claim 1, further comprising:
a protection sheet (300) disposed between the upper plate (220) and the battery cell stacked member (110).

4. A battery pack comprising:
at least one battery module (100) of any one of claim 1 to claim 3; and
a pack case of packaging the at least one battery module (100).

5. A device comprising at least one battery pack of claim 4.

## Patentansprüche

1. Batteriemodul (100), umfassend:
ein Batteriezellen-Stapelelement (110), in welchem eine Mehrzahl von Batteriezellen gestapelt sind;
einen U-förmigen Rahmen (210), welcher das Batteriezellen-Stapelelement (110) aufnimmt und einen geöffneten oberen Teil aufweist,
wobei wenigstens zwei obere Platten (220) voneinander beabstandet sind und einen Teil des Batteriezellen-Stapelelements (110) an dem geöffneten oberen Teil des U-förmigen Rahmens (210) bedecken,
wobei der Teil, an welchem zwei benachbarte obere Platten (220) unter den wenigstens zwei oberen Platten (220) voneinander beabstandet sind, als ein freier Raum existiert,
wobei der U-förmige Rahmen (210) einen unteren Teil und zwei Seitenteile umfasst, welche sich von beiden Enden des unteren Teils erstrecken,
wobei die obere Platte (220) eine Streifenform aufweist, so dass beide Enden der oberen Platte (220) mit dem oberen Teil des U-förmigen Rahmens (210) verbunden sind,
wobei die obere Platte (220) einen Kopplungsabschnitt (222) umfasst, welcher sich in Richtung des U-förmigen Rahmens (210) an beiden Enden erstreckt,
und wobei:
der Kopplungsabschnitt (222) der oberen Platte (220) und der U-förmige Rahmen (210) durch eine Schnappverbindung gekoppelt sind,
der Kopplungsabschnitt (222) einen Hakenabschnitt (222a) umfasst, in welchem ein Vorsprung ausgebildet ist, welcher in Richtung des Batteriezellen-Stapelelements (110) vorsteht, und
der U-förmige Rahmen (210) ein Kopplungsloch (210a) umfasst, welches mit dem Vorsprung eingreift oder umgekehrt.

2. Batteriemodul (100) nach Anspruch 1, wobei:
der freie Raum als ein Belüftungsloch wirkt.

3. Batteriemodul (100) nach Anspruch 1, ferner umfassend:
eine Schutzbahn (300), welcher zwischen der oberen Platte (220) und dem Batteriezellen-Stapelelement (110) angeordnet ist.

4. Batteriepack umfassend:
wenigstens ein Batteriemodul (100) nach einem aus Anspruch 1 bis Anspruch 3; und
ein Packgehäuse für ein Verpacken des wenigstes einen Batteriemoduls (100).

5. Vorrichtung, umfassend wenigstens einen Batteriepack nach Anspruch 4.

## Revendications

1. Module de batterie (100) comprenant :
un organe empilé de cellules de batterie (110) dans lequel une pluralité de cellules de batterie sont empilées ;
un cadre en forme de U (210) qui accueille l'organe empilé de cellules de batterie (110) et a une partie supérieure ouverte,
dans lequel au moins deux plaques supérieures (220) sont espacées l'une de l'autre et recouvrent une partie de l'organe empilé de cellules de batterie (110) au niveau de la partie supérieure ouverte du cadre en forme de U (210),
dans lequel la partie où deux plaques supérieures (220) adjacentes parmi les au moins deux plaques supérieures (220) sont espacées l'une de l'autre existe sous forme d'espace vide,
dans lequel le cadre en forme de U (210) inclut une partie basse et deux parties latérales prolongeant les deux extrémités de la partie basse,
dans lequel la plaque supérieure (220) a une forme de sangle de sorte que les deux extrémités de la plaque supérieure (220) sont jointes à la partie supérieure du cadre en forme de U (210),
dans lequel la plaque supérieure (220) inclut une partie de couplage (222) s'étendant vers le cadre en forme de U (210) aux deux extrémités,
et dans lequel :
la partie de couplage (222) de la plaque supérieure (220) et le cadre en forme de U (210) sont couplés par un encliquetage,
la partie de couplage (222) inclut une partie crochet (222a) dans laquelle une saillie faisant saillie vers l'organe empilé de cellules de batterie (110) est formée, et
le cadre en forme de U (210) inclut un trou de couplage (210a) qui vient en prise avec la saillie, ou vice versa.

2. Module de batterie (100) selon la revendication 1, dans lequel :
l'espace vide sert de trou d'évent.

3. Module de batterie (100) selon la revendication 1, comprenant en outre :
une feuille de protection (300) disposée entre la plaque supérieure (220) et l'organe empilé de cellules de batterie (110).

4. Bloc-batterie comprenant :
au moins un module de batterie (100) selon l'une quelconque de la revendication 1 à la revendication 3 ; et
un boîtier de bloc pour la mise en boîtier de l'au moins un module de batterie (100).

5. Dispositif comprenant au moins un bloc-batterie selon la revendication 4.
